# EUROPÄISCHE PATENTSCHRIFT

(11) **EP 1 792 776 B1**
(45) Veröffentlichungstag und Bekanntmachung des Hinweises auf die Patenterteilung: **27.07.2011**
(21) Anmeldenummer: 06023458.0
(22) Anmeldetag: 10.11.2006
(51) Int. Cl.: B60Q 1/48, G08G 1/16

(54) **Verfahren zur Detektion und Anzeige einer Parklücke und Einparkassistenzsystem eines Kraftfahrzeugs**
Method for detection and display of a parking space and parking assistance system of a motor vehicle
Procédé destiné à la détection et à la signalisation d'une place de stationnement et système d'assistance au stationnement d'un véhicule automobile

(30) Priorität: 01.12.2005 DE 102005057344
(43) Veröffentlichungstag der Anmeldung: 06.06.2007
(73) Patentinhaber: Volkswagen Aktiengesellschaft, 38436 Wolfsburg (DE)
(72) Erfinder: Rohlfs, Michael, Dr., 38531 Rötgesbüttel (DE); Schwitters, Frank, 38154 Königslutter (DE); Schöning, Volkmar, 30900 Wedemark (DE)

(56) Entgegenhaltungen:
- EP-A- 1 510 441
- DE-A1- 10 250 021

## Beschreibung

Die Erfindung betrifft ein Verfahren zur Detektion und Anzeige einer Parklücke in einem Kraftfahrzeug und ein Einparkassistenzsystem eines Kraftfahrzeugs nach dem Oberbegriff des Anspruchs 1 bzw. des Anspruchs 10.

Gegenwärtig werden Fahrerassistenzsysteme entwickelt, die den Fahrer beim Einparken, insbesondere beim Rückwärtseinparken, unterstützen. Dabei können zur Unterstützung des Fahrers seitens des Assistenzsystems Lenkeingriffe erfolgen, was als Lenkassistenz bezeichnet wird, oder das Kraftfahrzeug kann vollautomatisch einparken. Bevor dem Fahrer jedoch eine Lenkassistenz angeboten werden kann, muss das System Kenntnis über die Zielparkposition erlangen.

In dem mit Prius bezeichneten Kraftfahrzeug von Toyota ist ein Fahrerassistenzsystem angeordnet, bei dem die Zielparkposition auf einem als Touchscreen ausgebildeten Display dargestellt und vom Fahrer über den Touchscreen eingestellt wird. Dabei wird ein Bild der Umgebung durch eine im Heck des Fahrzeugs integrierte Kamera, die auch als Rearview-Kamera bezeichnet wird, aufgenommen und auf dem Display dargestellt. Die Zielparkposition ist durch ein Rechteck dargestellt, welches durch eine geeignete Pfeilsymbolik auf dem Display positioniert werden kann. Nachteilig bei diesem System ist, dass die Parklücke nicht vermessen wird und der Fahrer erst dann die Information über die Größe der Parklücke bekommt, wenn er das Rechteck positioniert hat.

Aus der Druckschrift DE 102 50 021 A1 ist ein Verfahren bekannt, mit dem mittels einer Kamera die Umgebung eines Fahrzeuges aufgenommen werden kann, welche dann auf einem Bildschirm dargestellt wird. Befindet sich in dem Aufnahmebereich der Kamera eine geeignete Parklücke, so wird auf dem Bildschirm ein Parksymbol eingeblendet, so dass die Parklücke unter Berücksichtung von Fahrzeuggröße und Lenkwinkel vom jeweiligen Fahrzeug angefahren werden kann. Nachteilig an diesem System ist, dass die Kamera nur die rückwärtige Umgebung des Fahrzeugs erfasst. Weiter ist von Nachteil, dass die Parklücke nicht vermessen wird. Überdies können großteils nur Längsparkplätze und keine Kopfparkplätze von der Kamera erfasst werden.

Aus der DE 199 33 732 A1 ist eine Ein- und Ausparkhilfe bekannt, bei der durch Sensoren die Umgebung des Kraftfahrzeugs und dessen Lenkwinkel erfasst wird. Aus den erfassten Daten wird dann ein Einparkvorgang errechnet. Nachteil dieses Systems ist, dass dem Fahrer nicht die Möglichkeit gegeben wird, die Parkposition selbst zu bestimmen.

Dokument DE 102 50 021 A1 beschreibt ein Verfahren zum Betrieb eines Darstellungssystems in einem Fahrzeug zum Auffinden eines Parkplatzes, wobei auf einem Bildschirm ein . Parkplatzsymbol dargestellt wird, den das Fahrzeug unter Berücksichtigung der Fahrzeugeigenschaften, insbesondere der Fahrzeuggröße und des maximalen Lenkwinkels, erreichen kann.

Der Erfindung liegt daher die Aufgabe zugrunde, ein Verfahren zur Detektion und Anzeige einer Parklücke in einem Kraftfahrzeug und ein Einparkassistenzsystem eines Kraftfahrzeugs zu schaffen, wobei der Fahrzeuglenker prägnanter und d rekter über den Parkplatz und dessen Anfahrbarkeit informiert wird.

Diese Aufgabe wird durch ein Verfahren zur Detektion und Anzeige einer Parklücke mit den Merkmalen des Anspruchs 1 sowie durch ein Einparkassistenzsystem mit den Merkmalen des Anspruchs 11 gelöst. Bevorzugte Ausgestaltungen der Erfindung sind Gegenstand der Unteransprüche.

Das erfindungsgemäße Verfahren zur Detektion und Anzeige einer für ein Kraftfahrzeug geeigneten Parklücke auf einem Rearview-Bildschirm eines Rearv ew-Einparksystem des Kraftfahrzeugs, welches eine Rearview-Kamera, eine Recheneinheit und eine Bildverarbeitungseinheit aufweist, wobei ein das Fahrzeug darstellende Parkplatzsymbol in dem Rearview-Bildschirm dargestellt wird, umfasst die folgenden Schritte:
- Vermessen einer Parklücke unterhalb einer Grenzgeschwindigkeit des Fahrzeugs mittels einer Sensorik,
- Berechnen mittels der Recheneinheit, ob die detektierte Pa klücke für das Fahrzeug mit den Fahrzeugaußenmaßen geeignet ist,
- Berechnen, ob unter Voraussetzung eines maximalen Lenkwinkels die detektierte Parklücke angefahren werden kann, und
- Darstellen eines perspektivisch korrekten Parkplatzsymbols, welches die Außenmaße des Fahrzeugs wiedergibt, auf dem Rearview-Bildschirm zusammen mit der erfassten Parklücke und deren Umgehung, wenn die detektierte Parklücke für das Fahrzeug geeignet ist, wobei
   das Parkplatzsymbol in einer ersten Farbe dargestellt wird, wenn die detektierte Parklücke für das Fahrzeug geeignet ist, und
   das Parkplatzsymbol in einer zweiten Farbe dargestellt wird wenn die Parklücke vom aktuellen Standpunkt des Fahrzeugs angefahren werden kann.

Die Einblendung eines Parkplatzsymbols erfolgt daher nur dann, wenn eine geeignete Parklücke erfolgreich detektiert wurde, wobei es gleichgültig ist, ob es sich um eine Längs- oder Kopfparklücke handelt. Ferner kann das Parkplatzsymbol vom System automatisch mittig in der dargestellten Parklücke platziert werden, wobei ein Toleranzabstandsbereich beispielsweise durch gestrichelte Linien am Bildschirm angezeigt wird.

Vorzugsweise wird die Parklücke durch Bestimmen der Parklückentiefe mittels Entfernungssensoren und durch Bestimmen des zurückgelegten Weges mittels eines Wegsensor vermessen. Insbesondere ist es möglich, einen Rangierabstand auf dem Rearview-Bildschirm anzuzeigen.

Vorzugsweise kann nach erfolgreicher Detektion der Parklücke, jedoch bei fehlender Anfahrmöglichkeit aufgrund der aktuellen Position des Kraftfahrzeuges ein rotes Parkplatzsymbol und/oder ein Warnsignal den Fahrzeugführer vor der Anfahrt der Parklücke warnen.

Insbesondere kann der Fahrzeugführer durch Ausgabe von bildlichen Meldungen auf dem Rearview-Bildschirm, insbesondere Pfeile, veranlasst werden, das Fahrzeug in eine für die Anfahrt der Parklücke geeignete Position zu bewegen.

Vorzugsweise wird das Parkplatzsymbol in grüner Farbe dargestellt, wenn die Parklücke vom aktuellen Standpunkt des Kraftfahrzeugs angefahren werden kann. Insbesondere ist es möglich, dass das Parkplatzsymbol sich bei Entfernung von der optimalen Anfahrposition in seiner Farbintensität ändert, insbesondere kann die Farbintensität abnehmen.

Bevorzugt werden nach Überschreitung einer voreingestellten maximalen Entfernung von der Parklücke durch das Kraftfahrzeug das Parkplatzsymbol und gegebenenfalls der Rangierabstand automatisch ausgeblendet.

Weiterhin kann in einer bevorzugten Ausführungsform der Fahrzeugführer die Zielparkposition des Kraftfahrzeugs durch manuelle Eingabe, insbesondere über das Verschieben des Parkplatzsymbols innerhalb des am Bildschirm dargestellten Parkraumes, verändern. Dabei ist vorzugsweise der Rearview-Bildschirm als Touch-Screen ausgebildet.

Der Fahrzeugführer hat daher die Möglichkeit, die vom System errechnete Parkposition durch manuelle Eingabe zu akzeptieren oder zu verändern. Dabei wird die jeweilige Eingabe der Parkposition durch den Fahrer bildlich und perspektivisch korrekt von der Bildverarbeitungseinheit auf dem Rearview-Bildschirm dargestellt.

Vorzugsweise werden die Daten der Parklücke und des aktuellen Standortes des Kraftfahrzeuges sowie die errechnete oder von Fahrzeugführer eingegebene Zielparkposition an ein Einparksystem weitergeleitet werden, welches den Einparkvorgang halbautomatisch oder automatisch durchführt.

Ein erfindungsgemäßer Einparkassistent eines Kraftfahrzeugs zur Durchführung des oben erläuterten Verfahrens weist ein Rearview-Einparksystem, das eine Rearview-Kamera, eine Recheneinheit, eine Bildverarbeitungseinheit und einen Rearview-Bildschirm umfasst, wobei ein das Fahrzeug darstellendes Parkplatzsymbol auf dem Rearview-Bildschim dargestellt wird, und eine Sensorik zur Detektion und Bestimmung der Größe einer Parklücke auf, wobei das Parkplatzsymbol in einer ersten Farbe dargestellt wird, wenn die detektierte Parklücke für das Fahrzeug geeignet ist, und das Parkplatzsymbol in einer zweiten Farbe dargestellt wird, wenn die Parklücke vom aktuellen Standpunkt des Fahrzeugs angefahren werden kann.

Vorzugsweise weist die Sensorik seitlich am Kraftfahrzeug angeordnete Sensoren zur Entfernungsmessung und einen Wegsensor zur Bestimmung eines zurückgelegten Weges auf. Insbesondere können die Sensoren zur Entfernungsmessung durch Ultraschallsensoren gebildet werden. Weiter bevorzugt weist der Einparkassistent eine Eingabevorrichtung zur fahrerseitigen Eingabe von Informationen auf.

Ferner kann in einer bevorzugten Ausführungsform der Einparkassistent eine Vorrichtung zur Lenkunterstützung und/oder zum automatischen Einparken aufweisen.

Eine bevorzugte Ausführungsform der Erfindung wird nachstehend anhand der Zeichnung erläutert. Dabei zeigt
- Fig. 1: eine beispielhafte Parklückensituation in Draufsicht, und
- Fig. 2: den Ablauf einer Parklückenerkennung als Funktion der Fahrzeugposition.

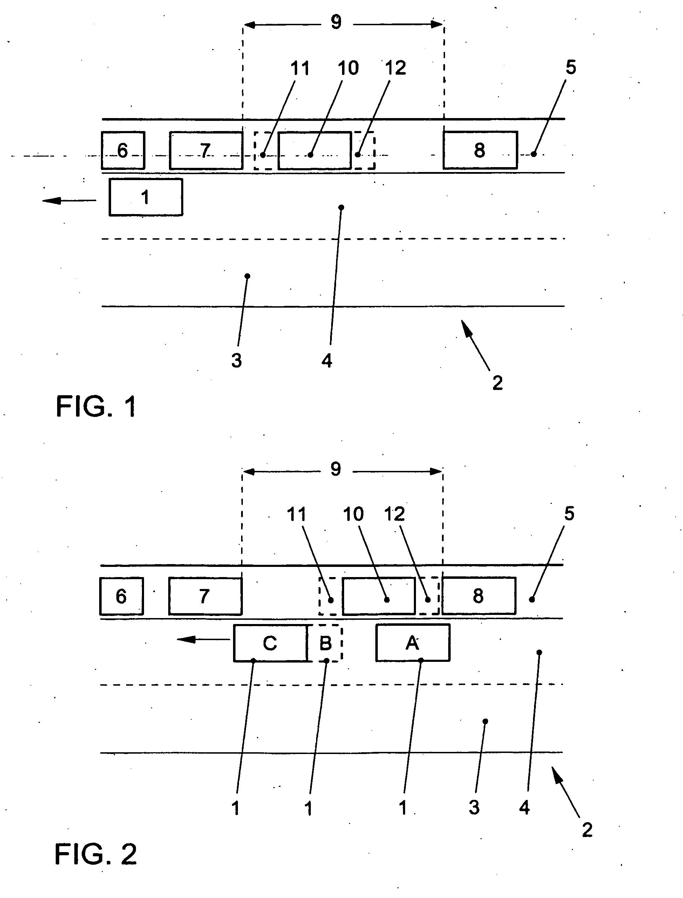

Fig. 1 zeigt in schematischer Draufsicht eine übliche Verkehrssituation beim Einparken bzw. bei der Suche eines Parkplatzes. Ein Fahrzeug 1 fährt entlang einer Fahrstraße 2 mit zwei, im Allgemeinen gegenläufigen Fahrbahnen 3, 4, wobei der Pfeil die Fahrtrichtung des Fahrzeugs 1 wiedergibt. Parallel zur Fahrbahn 4 des Fahrzeugs 1 erstreckt sich ein Parkbuchtbereich 5, in dem sich parkende Fahrzeuge 6, 7, 8 befinden. Zwischen zwei der parkenden Fahrzeuge 7 und 8 befindet sich innerhalb einer Parklücke 9 eine Zielparkposition 10, d.h. ein möglicher Parkplatz, wobei sich um diese Zielparkposition ein vorderer und hinterer Toleranzabstandsbereich 11, 12 jeweils anschließt, die hier gestrichelt dargestellt sind.

Fig. 2 zeigt die Situation des zu parkenden Kraftfahrzeugs 1 auf der Fahrbahn 4 einer Fahrstraße 2 in drei möglichen Ausgangspositionen A, B und C, wobei auch hier der Pfeil die Fahrtrichtung des Fahrzeugs 1 wiedergibt.

In der anfänglichen Ausgangsposition A des Kraftfahrzeugs 1 erkennt der Einparkassistent noch keine Parklücke 9, da die Entfernungs- und Wegmessung keinen ausreichenden Platz für eine Zielparkposition zwischen den parkenden Fahrzeugen 7 und 8 im Parkbuchtbereich 5 ermitteln kann. Es erfolgt daher keine Anzeige eines Parkplatzsymbols in der Rearview-Anzeige des Einparkassistenten.

In der Position B des Kraftfahrzeugs 1, die hier gepunktet dargestellt ist, wird eine minimale Parklückenlänge vermessen, so dass der Einparkassistent auf eine mögliche Parklücke schließt. Es wird daher eine mögliche Zielparkposition angezeigt. Da allerdings von dieser Position B die Zielparkposition nicht anfahrbar ist, beispielsweise da der Lenkwinkelausschlag größer als ein maximaler möglicher Lenkwinkel sein würde, wird dieses beispielsweise durch ein rotes Parkplatzsymbol und/oder ein Warnsignal kenntlich gemacht. Gegebenenfalls werden dem Fahrer Anweisungen gegeben, beispielsweise über auf dem Touch-Screen dargestellte Pfeile, dass er das Fahrzeug zum Einparken weiter in Fahrtrichtung bewegen soll.

In der Position C ist die Zielparkposition 9 von dem Fahrzeug 1 anfahrbar und die Zielparkposition wird beispielsweise grün in der Anzeige dargestellt. Mit anderen Worten, während des Wechsels des Fahrzeugs 1 von der Position B zur Position C wechselt das Parkplatzsymbol von der roten zu einer grünen Symbolisierung, sofern die Zielparkposition 9 vom aktuellen Standort anfahrbar ist.

Hat sich das Fahrzeug über eine vorbestimmte maximale Entfernung vom möglichen Parkplatz entfernt, wird das Parkplatzsymbol aus der Anzeige entfernt oder die Intensität der Markierung nimmt mit der Entfernung zur Parklücke ab.

In der möglichen Parklücke wird das Symbol beispielsweise automatisch mittig gegebenenfalls mit einem Toleranzabstand zum Rangieren platziert. Der Fahrer hat nun die Möglichkeit, die Plausibilität der angezeigten Zielparkposition zu überprüfen.

Möchte er die angezeigte Zielparkposition anfahren, aktiviert der Fahrer das Einparksystem des Einparkassistenten und das System übernimmt die erforderlichen Lenkbewegungen zum Einparken in die Parklücke, wobei der Fahrer ggf. Blinker und das Fahr- und Bremspedal betätigen muss. Auch ein automatisches Einparken, bei dem ein Einparksystem alle notwendigen Lenk- und Pedalbewegungen durchführt (bzw. Sollwerte vorgibt), ist möglich.

Gegenüber dem Stand der Technik hat dies den Vorteil, dass der Fahrer nach Vermessung und Erkennung einer Parklücke diese direkt anfahren kann ohne erst eine durch ein manuelles Verschieben der Zielparkposition bewirkte Auswahl vornehmen zu müssen: Der Bedienkomfort und eine Akzeptanz des Fahrerassistenzsystems werden dadurch erhöht.

Der Fahrer hat weiterhin die Möglichkeit, das die Zielparkposition darstellende Symbol manuell zu verschieben, um beispielsweise einen größeren Freiraum hinter dem Fahrzeugheck zum Entladen des Kofferraumes vorzusehen. Das Symbol behält dabei so lange die gleiche, hier im Beispiel grüne Farbe, solange der Benutzer das Symbol im möglichen Parkraum verschiebt. Verschiebt er dieses über den möglichen Parkraum hinaus, wechselt das Symbol die Farbe (z.B. rote Markierung). Nun muss der Benutzer zusätzlich bewusst bestätigen, dass er diesen vom System als gesperrt erkannten Parkraum anfahren möchte. Somit hat der Benutzer die Möglichkeit, z.B. teilweise auf einem Bürgersteig oder über eine Parkbucht hinaus zu parken, sofern er dies unbedingt wünscht. Die Verantwortung über den Einparkvorgang verbleibt dabei jederzeit beim Benutzer, er erhält jedoch beispielsweise farblich kodierte Hinweise über mögliche unzulässige Parkpositionen. Dieses hat den Vorteil, dass der Benutzer das System beispielsweise bei einer Fehlerkennung übersteuern kann. Eine derartige Fehlerkennung kann beispielsweise vorliegen, wenn das System zwar eine mögliche Parklücke erkennt, diese aber aufgrund des Vorhandenseins eines Fußgängers in der Parkbucht die mögliche Parkposition in einen bei der Vermessung freien Bereich schiebt. Wenn der Fußgänger sich nun nach der Vorbeifahrt aus der Parkbucht entfernt oder wenn ein Fahrzeug aus einer weiteren Parklücke herausfährt, kann der Benutzer das Parkplatzsymbol in den mittlerweile freigewordenen Bereich verschieben. Dabei verändert sich das Symbol beispielsweise in seiner Farbe oder es wird ein Warnsignal ausgegeben, was den Fahrer zu einer weiteren, zusätzlichen Überprüfung der angewählten Zielparkposition veranlassen soll.

### Bezugszeichenliste

- 1: Kraftfahrzeug
- 2: Fahrstraße
- 3: Fahrbahn
- 4: Fahrbahn
- 5: Parkbuchtbereich
- 6: parkendes Fahrzeug
- 7: parkendes Fahrzeug
- 8: parkendes Fahrzeug
- 9: Parklücke
- 10: Zielparkposition
- 11: vorderer Toleranzbereich
- 12: hinterer Toleranzbereich
- A: erste Position Kraftfahrzeug 1
- B: zweite Position Kraftfahrzeug 1
- C: dritte Position Kraftfahrzeug 1

## Patentansprüche

1. Verfahren zur Detektion und Anzeige einer für ein Kraftfahrzeug geeigneten Parklücke auf einem Rearview-Bildschirm eines Rearview-Einparksystem des Kraftfahrzeugs, welches eine Rearview-Kamera, eine Recheneinheit und eine Bildverarbeitungseinheit aufweist, wobei ein das Fahrzeug darstellendes Parkplatzsymbol auf dem Rearview-Bildschirm dargestellt wird, und das Verfahren die folgenden Schritte aufweist:
Vermessen einer Parklücke unterhalb einer Grenzgeschwindigkeit des Fahrzeugs durch Bestimmen der Parklückentiefe mittels Entfernungssensoren und durch Bestimmen des zurückgelegten Weges mittels eines Wegsensors,
Berechnen mittels der Recheneinheit, ob die detektierte Parklücke für das Fahrzeug mit den Fahrzeugaußenmaßen geeignet ist,
Berechnen, ob unter Voraussetzung eines maximalen Lenkwinkels die detektierte Parklücke angefahren werden kann, und
Darstellen eines perspektivisch korrekten Parkplatzsymbols, welches die Außenmaße des Fahrzeugs wiedergibt, auf dem Rearview-Bildschirm zusammen mit der erfassten Parklücke und deren Umgebung, wenn die detektierte Parklücke für das Fahrzeug geeignet ist, **dadurch gekennzeichnet, dass**
das Parkplatzsymbol in einer ersten Farbe dargestellt wird, wenn die detektierte Parklücke für das Fahrzeug geeignet ist, und
das Parkplatzsymbol in einer zweiten Farbe dargestellt wird, wenn die Parklücke vom aktuellen Standpunkt des Fahrzeugs angefahren werden kann.

2. Verfahren nach Anspruch 1, 4 und 5, **dadurch gekennzeichnet, dass** ein Rangierabstand auf dem Rearview-Bildschirm angezeigt wird.

3. Verfahren nach einem der vorangegangenen Ansprüche, **dadurch gekennzeichnet, dass** nach erfolgreicher Detektion der Parklücke jedoch bei fehlender Anfahrmöglichkeit aufgrund der aktuellen Position des Kraftfahrzeuges ein rotes Parkplatzsymbol und/oder ein Warnsignal den Fahrzeugführer vor der Anfahrt der Parklücke warnen.

4. Verfahren nach Anspruch 3, **dadurch gekennzeichnet, dass** der Fahrzeugführer durch Ausgabe von bildlichen Meldungen auf dem Rearview-Bildschirm, insbesondere Pfeile, veranlasst wird, das Fahrzeug in eine für die Anfahrt der Parklücke geeignete Position zu bewegen.

5. Verfahren nach einem der vorangegangenen Ansprüche, **dadurch gekennzeichnet, dass** das Parkplatzsymbol in grüner Farbe dargestellt wird, wenn die Parklücke vom aktuellen Standpunkt des Kraftfahrzeugs angefahren werden kann.

6. Verfahren nach einem der vorangegangenen Ansprüche, **dadurch gekennzeichnet, dass** das Parkplatzsymbol sich bei Entfernung von der optimalen Anfahrposition in seiner Farbintensität ändert, insbesondere die Farbintensität abnimmt.

7. Verfahren nach einem der vorangegangenen Ansprüche, **dadurch gekennzeichnet, dass** nach Überschreitung einer voreingestellten maximalen Entfernung von der Parklücke durch das Kraftfahrzeug das Parkplatzsymbol und gegebenenfalls der Rangierabstand automatisch ausgeblendet werden.

8. Verfahren nach einem der vorangegangenen Ansprüche, **dadurch gekennzeichnet, dass** der Fahrzeugführer die Zielparkposition des Kraftfahrzeugs durch manuelle Eingabe, insbesondere über das Verschieben des Parkplatzsymbols innerhalb des am Bildschirm dargestellten Parkraumes, verändern kann.

9. Verfahren nach einem der vorangegangenen Ansprüche, **dadurch gekennzeichnet, dass** die Daten der Parklücke und des aktuellen Standortes des Kraftfahrzeuges sowie die errechnete oder vom Fahrzeugführer eingegebene Zielparkposition an ein Einparksystem weitergeleitet werden, welches den Einparkvorgang halbautomatisch oder automatisch durchführt.

10. Einparkassistent eines Kraftfahrzeugs zur Durchführung des Verfahrens nach einem der vorangegangenen Ansprüche mit einem Rearview-Einparksystem des Kraftfahrzeugs, welches eine Rearview-Kamera, eine Recheneinheit, eine Bildverarbeitungseinheit und einen Rearview-Bildschirm aufweist, wobei ein das Fahrzeug darstellende Parkplatzsymbol auf dem Rearview-Bildschirm dargestellt wird, **dadurch gekennzeichnet, dass** der Einparkassistent eine Sensorik zur Detektion und Bestimmung der Größe einer Parklücke aufweist, wobei das Parkplatzsymbol in einer ersten Farbe dargestellt wird, wenn die detektierte Parklücke für das Fahrzeug geeignet ist, und das Parkplatzsymbol in einer zweiten Farbe dargestellt wird, wenn die Parklücke vom aktuellen Standpunkt des Fahrzeugs angefahren werden kann.

11. Einparkassistent nach Anspruch 10, **dadurch gekennzeichnet, dass** die Sensorik seitlich am Kraftfahrzeug angeordnete Sensoren zur Entfernungsmessung und einen Wegsensor zur Bestimmung eines zurückgelegten Weges aufweist.

12. Einparkassistent nach Anspruch 11, **dadurch gekennzeichnet, dass** die Sensoren zur Entfernungsmessung durch Ultraschallsensoren gebildet werden.

13. Einparkassistent nach einem der Ansprüche 10 bis 12, **dadurch gekennzeichnet, dass** der Einparkassistent eine Eingabevorrichtung zur fahrerseitigen Eingabe von Informationen aufweist.

14. Einparkassistent nach einem der Ansprüche 10 bis 13, **dadurch gekennzeichnet, dass** der Einparkassistent eine Vorrichtung zur Lenkunterstützung und/oder zum automatischen Einparken aufweist.

## Claims

1. Method for detecting and displaying a parking space, suitable for a motor vehicle, on a rearview screen of a rearview parking system of the motor vehicle which has a rearview camera, a computer unit and an image processing unit, wherein a parking space symbol which represents the vehicle is presented on the rearview screen, and the method comprises the following steps:
measurement of a parking space below a limiting speed of the vehicle by determining the depth of the parking space by means of distance sensors and by determining the distance travelled by means of a travel sensor,
calculation of whether the detected parking space is suitable for the vehicle with the external dimensions of the vehicle, by means of the computing unit,
calculation of whether, assuming a maximum steering angle, the detected parking space can be driven to, and
displaying of a perspectively correct parking space symbol which represents the external dimensions of the vehicle on the rearview screen together with the captured parking space and the surroundings thereof if the detected parking space is suitable for the vehicle,
**characterized in that**
the parking space symbol is represented in a first colour if the detected parking space is suitable for the vehicle, and
the parking space symbol is represented in a second colour if the parking space can be driven to from the vehicle's current position.

2. Method according to Claim 1, **characterized in that** a manoeuvring distance is displayed on the rearview screen.

3. Method according to one of the preceding claims, **characterized in that**, after successful detection of the parking space but when the current position of the motor vehicle precludes the possibility of driving to the parking space, a red parking space symbol and/or a warning signal warn the driver of the vehicle against driving to the parking space.

4. Method according to Claim 3, **characterized in that** the driver of the vehicle is induced to move the vehicle to a position suitable for driving to the parking space by the outputting of figurative messages on the rearview screen, in particular arrows.

5. Method according to one of the preceding claims, **characterized in that** the parking space symbol is represented in green, if the parking space can be driven to from the current position of the motor vehicle.

6. Method according to one of the preceding claims, **characterized in that** in the case of movement away from the optimum approach position the colour intensity of the parking space symbol changes, in particular the colour intensity decreases.

7. Method according to one of the preceding claims, **characterized in that** after a preset maximum distance from the parking space is exceeded by the motor vehicle, the parking space symbol and, if appropriate, the manoeuvring distance, are automatically removed from the display.

8. Method according to one of the preceding claims, **characterized in that** the driver of the vehicle can change the target parking position of the motor vehicle by manual input, in particular by moving the parking space symbol within the parking space which is represented on the screen.

9. Method according to one of the preceding claims, **characterized in that** the data on the parking space and on the current location of the motor vehicle as well as the target parking position which has been calculated or input by the driver of the vehicle are passed on to a parking system which carries out the parking process semi-automatically or automatically.

10. Parking assistant of a motor vehicle for carrying out the method according to one of the preceding claims, having a rearview parking system of the motor vehicle which has a rearview camera, a computer unit, an image processing unit and a rearview screen, wherein a parking space symbol which represents the vehicle is represented on the rearview screen, **characterized in that** the parking assistant has a sensor system for detecting and determining the size of a parking space, wherein the parking space symbol is displayed in a first colour if the detected parking space is suitable for the vehicle, and the parking space symbol is displayed in a second colour if the parking space can be driven to from the current position of the vehicle.

11. Parking assistant according to Claim 10, **characterized in that** the sensor system has sensors which are arranged laterally on the motor vehicle and have the purpose of measuring distance and a travel sensor for determining a distance travelled.

12. Parking assistant according to Claim 11, **characterized in that** the sensors are designed for measuring distance by means of ultrasonic sensors.

13. Parking assistant according to one of Claims 10 to 12, **characterized in that** the parking assistant has an input device for driver-side inputting of information.

14. Parking assistant according to one of Claims 10 to 13, **characterized in that** the parking assistant has a device for providing steering assistance and/or for carrying out automatic parking.

## Revendications

1. Procédé de détection et d'affichage d'un emplacement de stationnement approprié pour un véhicule automobile sur un écran de vision arrière d'un système de stationnement à vision arrière du véhicule automobile, lequel présente une caméra de vision arrière, une unité de calcul et une unité de traitement d'image, un symbole de place de stationnement qui représente le véhicule étant représenté sur l'écran de vision arrière, et le procédé présentant les étapes suivantes :
Mesure d'un emplacement de stationnement au-dessous d'une vitesse limite du véhicule en déterminant la profondeur de l'emplacement de stationnement au moyen de capteurs de distance et en déterminant la course parcourue au moyen d'un capteur de course, Calcul, au moyen de l'unité de calcul, si l'emplacement de stationnement détecté pour le véhicule est approprié pour les dimensions extérieures du véhicule, Calcul, en supposant un angle de braquage maximum, s'il est possible de rejoindre l'emplacement de stationnement détecté, et
Représentation en perspective correcte d'un symbole de place de stationnement qui restitue les dimensions extérieures du véhicule sur l'écran de vision arrière conjointement avec l'emplacement de stationnement détecté et son environnement, si l'emplacement de stationnement détecté est approprié pour le véhicule,
**caractérisé en ce que**
le symbole de la place de stationnement est représenté dans une première couleur lorsque l'emplacement de stationnement détecté est approprié pour le véhicule et
le symbole de la place de stationnement est représenté dans une deuxième couleur lorsque l'emplacement de stationnement peut être rejoint depuis la position actuelle du véhicule.

2. Procédé selon la revendication 1, **caractérisé en ce qu'**un écart de manoeuvre est affiché sur l'écran de vision arrière.

3. Procédé selon l'une des revendications précédentes, **caractérisé en ce qu'**après une détection réussie de l'emplacement de stationnement, mais en l'absence de possibilité de le rejoindre en raison de la position actuelle du véhicule automobile, un symbole de place de stationnement rouge et/ou un signal d'alerte avertissent le conducteur du véhicule avant de rejoindre l'emplacement de stationnement.

4. Procédé selon la revendication 3, **caractérisé en ce que** le conducteur du véhicule est invité, par la diffusion de messages visuels sur l'écran de vision arrière, notamment des flèches, à déplacer le véhicule dans une position appropriée pour rejoindre l'emplacement de stationnement.

5. Procédé selon l'une des revendications précédentes, **caractérisé en ce que** le symbole de la place de stationnement est représenté en vert lorsque l'emplacement de stationnement peut être rejoint depuis la position actuelle du véhicule automobile.

6. Procédé selon l'une des revendications précédentes, **caractérisé en ce que** le symbole de la place de stationnement modifie son intensité lumineuse, diminue notamment son intensité lumineuse en cas d'éloignement de la position optimale pour la rejoindre.

7. Procédé selon l'une des revendications précédentes, **caractérisé en ce qu'**après que le véhicule automobile a dépassé une distance maximale préréglée par rapport à l'emplacement de stationnement, le symbole de la place de stationnement et éventuellement l'écart de manoeuvre sont automatiquement masqués.

8. Procédé selon l'une des revendications précédentes, **caractérisé en ce que** le conducteur du véhicule peut modifier la position de stationnement cible du véhicule automobile par une saisie manuelle, notamment en déplaçant le symbole de la place de stationnement à l'intérieur de l'espace de stationnement représenté sur l'écran.

9. Procédé selon l'une des revendications précédentes, **caractérisé en ce que** les données de l'emplacement de stationnement et de l'emplacement actuel du véhicule automobile ainsi que la position de stationnement cible calculée ou saisie par le conducteur du véhicule sont transmises à un système de mise en stationnement qui exécute l'opération de stationnement automatiquement ou semi-automatiquement.

10. Assistant à la mise en stationnement d'un véhicule automobile destiné à mettre en oeuvre le procédé selon l'une des revendications précédentes, comprenant un système de stationnement à vision arrière du véhicule automobile, lequel présente une caméra de vision arrière, une unité de calcul, une unité de traitement d'image et un écran de vision arrière, un symbole de place de stationnement qui représente le véhicule étant représenté sur l'écran de vision arrière, **caractérisé en ce. que** l'assistant à la mise en stationnement présente un dispositif de détection pour détecter et déterminer la taille d'un emplacement de stationnement, le symbole de la place de stationnement étant représenté dans une première couleur lorsque l'emplacement de stationnement détecté est approprié pour le véhicule et le symbole de la place de stationnement étant représenté dans une deuxième couleur lorsque l'emplacement de stationnement peut être rejoint depuis la position actuelle du véhicule.

11. Assistant à la mise en stationnement selon la revendication 10, **caractérisé en ce que** le dispositif de détection présente des capteurs montés latéralement sur le véhicule automobile pour mesurer la distance et un capteur de course pour déterminer une course parcourue.

12. Assistant à la mise en stationnement selon la revendication 11, **caractérisé en ce que** les capteurs de mesure de distance sont formés par des capteurs à ultrasons.

13. Assistant à la mise en stationnement selon l'une des revendications 10 à 12, **caractérisé en ce que** l'assistant à la mise en stationnement présente un dispositif de saisie pour la saisie d'informations par le conducteur.

14. Assistant à la mise en stationnement selon l'une des revendications 10 à 13, **caractérisé en ce que** l'assistant à la mise en stationnement présente un dispositif d'assistance à la direction et/ou de mise en stationnement automatique.
